# EUROPÄISCHE PATENTSCHRIFT

(11) **EP 3 722 068 B1**
(45) Veröffentlichungstag und Bekanntmachung des Hinweises auf die Patenterteilung: **18.12.2024**
(21) Anmeldenummer: 20169351.2
(22) Anmeldetag: 14.04.2020
(51) Int. Cl.: B29C 45/40, B22D 17/22

(54) **AUSWERFSTIFT MIT VERDREHSICHERUNG**
EJECTION PIN WITH ANTI-ROTATION FEATURE
BROCHE D'ÉJECTION POURVUE D'UNE SÉCURITÉ ANTI-ROTATION

(30) Priorität: 10.04.2019 DE 202019102059 U
(43) Veröffentlichungstag der Anmeldung: 14.10.2020
(73) Patentinhaber: KNARR Vertriebs GmbH, 95233 Helmbrechts (DE)
(72) Erfinder: KNARR, Rainer, 95233 Helmbrechts (DE)
(74) Vertreter: Samson & Partner Patentanwälte mbB

(56) Entgegenhaltungen:
- WO-A2-2008/014910
- CN-A- 102 672 913
- CN-U- 202 862 533
- DE-A1- 10 355 163
- DE-A1- 19 607 785
- DE-A1- 2 427 636
- DE-U1- 202004 018 293
- 2 November 2016 (2016-11-02), Retrieved from the Internet <URL:https://web.archive.org/web/20161115000000*/http://www.biker-normalien.com/produkte/auswerferstifte/auswerferstifte-din-1530-form-d.html> [retrieved on 20230927]
- 31 July 2016 (2016-07-31), Retrieved from the Internet <URL:https://www.acbtools.nl/wp-content/uploads/2016/11/4020-DIN-1530-D.pdf> [retrieved on 20230927]

## Beschreibung

### GEBIET DER ERFINDUNG

Die vorliegende Erfindung bezieht sich allgemein auf Gießwerkzeuge, und beispielsweise auf einen Auswerferstift zum Auswerfen von Formteilen sowie auf eine Tragplatten-Auswerferstift-Anordnung mit einem oder mehreren solcher Auswerferstifte.

### HINTERGRUND DER ERFINDUNG

In der Spritz- und Druckgusstechnik (z.B. für die Formung von Kunststoffen und niedrigschmelzenden Metalllegierungen) stellt sich allgemein die Aufgabe, am Ende des Gießvorgangs das erstarrte Formteil aus der Gießform herauszunehmen. Hierzu dienen häufig ein oder mehrere Auswerferstifte, welche auf einer beweglichen Tragplatte angeordnet sind und jeweils durch eine Bohrung in die Gießform hineinreichen; üblicherweise schließen die Auswerferstifte bei nicht-betätigtem Auswerfer stirnseitig mit der Innenwandung der Gießform bündig ab.

Ein Auswerfen eines gegossenen Teils erfolgt nach Öffnen des Gießwerkzeugs dadurch, dass die Tragplatte mit dem oder den Auswerferstiften in Richtung zur Form bewegt wird, wodurch der oder die Auswerferstifte in die Form eindringen und so das Formteil auswerfen.

Ein Beispiel für derartige Auswerferstifte und den beschriebenen Auswerfermechanismus ist aus der DE 43 16 029 C1 bekannt. Auswerferstifte sind als Hülsenauswerfer (mit innerer Freimachung) sowie als massive Stifte (ohne innere Freimachung) bekannt (siehe z.B. die genannte DE 43 16 029 C1 sowie DE 33 45 366 A1).

Im Allgemeinen entspricht die stirnseitige Formgebung des Auswerferstiftes der Formgebung des Formwerkzeugs an der Stelle, an welcher der Auswerferstift sitzt. Ist beispielsweise die Wandung des Formwerkzeugs geneigt, so wird der Auswerferstift stirnseitig eine entsprechende Neigung (relativ zu seiner Längsachse) aufweisen. Weist das Formwerkzeug an der entsprechenden Stelle beispielsweise eine Stufe auf, so wird auch der Auswerferstift stirnseitig eine entsprechende Stufe haben. In derartigen Fällen muss der Auswerferstift in einer definierten Position bezüglich Drehung um seine eigene Achse eingebaut sein und gegen Verdrehung um seine eigene Achse gesichert sein.

In der DE 33 45 366 A1 ist eine Verdrehsicherung für Auswerferstifte vorgeschlagen worden, bei der am Auswerferstift ein exzentrischer Kopf angeformt ist, welcher in eine entsprechend exzentrische Ausnehmung in der Tragplatte eingesetzt wird. Durch den Formschluss zwischen der Exzentrizität des Kopfes und derjenigen der Ausnehmung ist eine Verdrehung des Auswerferstiftes in der Tragplatte ausgeschlossen.

Obgleich mit diesem Vorschlag eine funktionsfähige Verdrehsicherung für Auswerferstifte bereitgestellt wurde, hat sich in der Praxis gezeigt, dass die vorgeschlagene Lösung noch nicht als optimal anzusehen ist. Beispielsweise zeigen die angeformten exzentrischen Köpfe in der Praxis herstellungsbedingt relativ große Toleranzen (im Bereich von 0,2 mm); auch neigen die vorgeschlagenen Auswerferstifte beim Einsetzen in die Tragplatte zum Verspannen.

Aus DE 20 2004 018 293 U1 ist ein Auswerferstift mit einer Verdrehsicherung gemäß dem Oberbegriff des Anspruchs 1 bekannt.

Aus DE 196 07 785 A1 ist ein weiteres Beispiel eines Auswerferstifts mit den Merkmalen des Oberbegriffs des Anspruchs 1 bekannt.

### ZUSAMMENFASSUNG DER ERFINDUNG

Die Erfindung betrifft einen Auswerferstift zum Auswerfen von Formteilen aus Gießwerkzeugen gemäß Anspruch 1.

Die Schräge kann durch Fräsung oder andere geeignete Herstellungsverfahren ausgebildet sein. Bevorzugt ist sie durch Umformung (z.B. Anstauchung) ausgebildet.

Die Schräge ist an Teilabschnitten an der Umfangsfläche des Kopfes vorgesehen sein. Sie ist jedoch umlaufend um den Kopf ausgebildet.

Ferner weist die Schräge den Winkel zur Schaftlängsachse in einem Bereich von 3° bis 10°.

Die Kopfumfangsfläche umfasst, insbesondere in einem oberen Teilabschnitt der Kopfumfangsfläche, eine Anlagefläche zur Anlage an die komplementäre Ausnehmung in der Tragplatte.

Insbesondere über einen unterschiedlichen Abstand der gegenüberliegenden gradlinigen Umfangsabschnitte zum Schaftmittelpunkt lässt sich ein Mittelversatz generieren. Dieser wiederum hat zur Folge, dass sich unterschiedliche Radien und Flächenlängen ausbilden lassen, die so eine einfache optische Unterscheidung der Einbauposition des Auswerferstiftes ermöglichen.

Beim Einsatz hilft die umlaufende Schräge einer Vorzentrierung des Auswerferstiftes und ermöglicht so eine schnelle und einfache Montage in der jeweiligen Tragplatte, insbesondere in einem Bereich mit einem schrägen Winkel von 1° bis 15°. Zusätzlich ist vorteilhaft eine Montage nur in einer Einbauposition möglich, die insbesondere optisch für einen Nutzer einfach zu erkennen ist.

Die unterschiedlichen Radien aufgrund des Mittenversatzes verstärken die optische Erkennbarkeit und ermöglichen selbst eine haptische Erkennbarkeit für einen Nutzer. Gleiches gilt für die unterschiedlichen Flächenabstände der Umfangsabschnitte. Der kürzere und der längere Flächenabstand stellen nur eine Einbausituation sicher.

Erfindungsgemäß wird so eine beidseitige Verdrehsicherung bereitgestellt, die eine höhere Genauigkeit gegenüber einer einseitigen Verdrehsicherung aufweist.

Aufgrund der Anordnung der Verdrehsicherung des Auswerferstiftes und deren Ausbildung an einem unteren Abschnitt der Umfangsfläche des Kopfes sowie der Auflagefläche des Kopfes lässt sich eine schwimmende Lagerung des Auswerferstiftes in der Tragplatte ermöglichen, sodass kein Verspannen des Auswerferstiftes in der Tragplatte auftritt.

Darüber hinaus ermöglicht die Stauchung des Kopfes auch eine platzsparende Ausbildung der Kopfform, sodass sich enge Abstände zwischen den Auswerferstiften in einer Tragplatte bereitstellen lassen.

Ein weiterer Aspekt betrifft eine Tragplatten-Auswerferstift-Anordnung mit einer Tragplatte mit einer oder mehreren Bohrungen mit Aufnahmen, in die Auswerferstifte der oben genannten Art eingesetzt sind. Die Aufnahmen sind zur Auswerferstift-Kopfform komplementär und nehmen die Köpfe auf. Die Schäfte treten durch die Bohrungen. Die Bohrungen weisen einen um so viel größeren Durchmesser als die Schäfte auf, dass die Position des oder der Auswerferstifte in der Tragplatte in Querrichtung zu den gegenüberliegenden geradlinigen Umfangsabschnitten durch diese Umfangsabschnitte im Zusammenwirken mit dazu komplementären Umfangsabschnitten der Aufnahmen definiert ist, aber nicht durch die Bohrungen.

Weitere Merkmale sind in den offenbarten Vorrichtungen implizit enthalten oder werden für den Fachmann aufgrund der folgenden detaillierten Beschreibung von Ausführungsformen und der angefügten Zeichnung ersichtlich.

### KURZE BESCHREIBUNG DER ZEICHNUNG

Ausführungsformen der Erfindung werden nun beispielhaft und unter Bezugnahme auf die angefügte Zeichnung beschrieben, in der:
Fig. 1 eine Seitenansicht einer beispielhaften Spritzgußform in Schnittansicht zeigt, in der Ausführungsformen der erfindungsgemäßen Auswerferstifte eingebaut sind;
Fig. 2 eine Draufsicht und eine Seitenansicht einer ersten Ausführungsform eines Auswerferstiftes zeigt;
Fig. 3 eine Draufsicht und eine Seitenansicht einer zweiten Ausführungsform eines Auswerferstiftes zeigt;
Fig. 4 eine Draufsicht und eine Seitenansicht einer dritten Ausführungsform eines Auswerferstiftes zeigt;
Fig. 5 eine Draufsicht einer beispielhaften Tragplatte für Auswerferstifte der in Fig. 2 dargestellten Ausführungsform zeigt;
Fig. 6 eine Schnittansicht der Tragplatte von Fig. 5 entlang der Linie A-A zeigt;
Fig. 7 eine perspektivische Darstellung einer weiteren Ausführungsform eines erfindungsgemäßen Auswerferstiftes zeigt;
Fig. 8a eine Draufsicht auf die Ausführungsform des Auswerferstiftes aus Fig. 7 zeigt; und
Fig. 8b eine Seitenansicht der Ausführungsform des Auswerferstiftes gemäß Fig. 7 zeigt.

### BESCHREIBUNG DER BEVORZUGTEN AUSFÜHRUNGSFORMEN

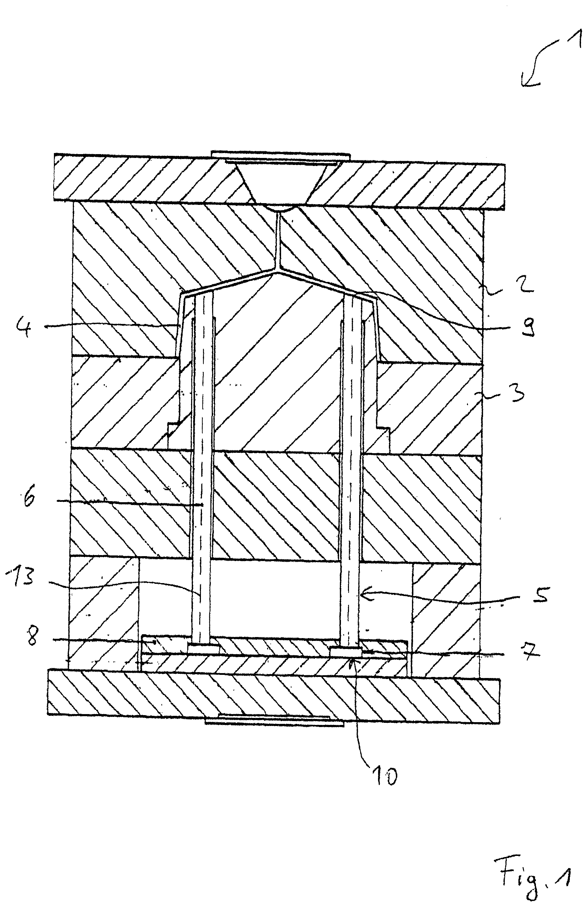

Fig. 1 zeigt eine Seitenansicht einer Spritzgußform, in der Ausführungsformen der erfindungsgemäßen Auswerferstifte eingebaut sind. Vor einer detaillierten Beschreibung der Fig. 1 folgen zunächst verschiedene Erläuterungen zu den Ausführungsformen.

Die beschriebenen Ausführungsformen zeigen einen Auswerferstift mit einem Schaft und einem durch Umformung (z.B. Anstauchung) angeformten Kopf. Der Kopf kann auch durch Fräsung oder andere geeignete Verfahren ausgestaltet sein. Der Kopf weist bei den Ausführungsformen - in Schaft-Längsrichtung gesehen - zwei gegenüberliegende geradlinige Umfangsabschnitte auf. Die gegenüberliegenden geradlinigen Umfangsabschnitte dienen der Verdrehsicherung, wenn der Auswerferstift in einer komplementären Tragplatte moniert ist. Die Tragplatte weist hierzu eine komplementäre Ausnehmung zur Aufnahme des Kopfs auf, welche - entsprechend der Kopfform - wenigstens zwei gegenüberliegende geradlinige Umfangsabschnitte aufweist. Bei einigen Ausführungsformen verlaufen die gegenüberliegenden geradlinigen Umfangsabschnitte parallel zueinander. Bei manchen dieser Ausführungsformen sie im gleichen Abstand vom Schaft-Mittelpunkt, sind also symmetrisch zu diesem. Bei anderen dieser Ausführungsformen verlaufen sie hingegen in unterschiedlichem Abstand vom Schaft-Mittelpunkt, sind also unsymmetrisch zu diesem.

Ein unterschiedlicher Abstand der gegenüberliegenden gradlinigen Umfangsabschnitte zum Schaftmittelpunkt generiert ein Mittelversatz. Dadurch lassen sich unterschiedliche Radien und Flächenlängen ausbilden, die eine einfache optische Unterscheidung der Einbauposition des Auswerferstiftes ermöglichen.

Bei anderen Ausführungsformen verlaufen die gegenüberliegenden geradlinigen Umfangsabschnitte nicht parallel zueinander, sondern zum Beispiel unter einem kleinen Winkel zueinander. Bei manchen Ausführungsformen sind ein oder mehrere der gegenüberliegenden geradlinigen Umfangsabschnitte aus Unterabschnitten winkelig zusammengesetzt sind. Die Eigenschaft "geradlinig" bezieht sich bei diesen also darauf, dass sie aus geradlinigen Unterabschnitten zusammengesetzt sind. Beispielsweise kann der Kopf im Wesentlichen die Form eines Sechskants haben, bei dem jeweils zwei aneinander mit 60 Grad angrenzende Unterabschnitte zusammen einen "geradlinigen, aus Unterabschnitten winkelig zusammengesetzten Umfangsabschnitt" bilden, und sich zwei derartige zusammengesetzte Abschnitte gegenüberliegen (allerdings wird bei einem solchen Sechskant noch eine "symmetrieaufhebende Maßnahme zur Aushebung der 60-Grad-Symmetrie dazukommen, siehe unten).

Der Kopf ist im Übrigen so geformt, dass der Auswerferstift in der komplementären Tragplatte nur in einer eindeutigen Einbauposition montierbar ist. Anders ausgedrückt bedeutet dies, dass die Kopfform (nur) eine 360-Grad-Symmetrie aufweist, also frühestens nach einer Drehung um 360 Grad mit sich selbst zur Deckung kommt (im Gegensatz dazu hat beispielsweise ein Kopf mit symmetrischen verbundenen und symmetrisch angeordneten geradlinigen Umfangsabschnitten eine 180-Grad-Symmetrie, und ein Sechskantkopf (der nach einer Drehung um 60 Grad in Deckung mit sich selbst kommt) hat eine 60-Grad-Symmetrie).

Bei Ausführungsformen mit unsymmetrischer Anordnung der gegenüberliegenden geradlinigen Umfangsabschnitte ist diese 360-Grad-Symmetrie bereits durch die Asymmetrie der genannten Umfangsabschnitte gegeben; eine weitere "symmetrieaushebende" Maßnahme bei der Kopfgestaltung ist daher nicht erforderlich (wenn auch nicht ausgeschlossen).

Bei Ausführungsformen mit symmetrischer Anordnung der gegenüberliegenden geradlinigen Umfangsabschnitte würde ohne weitere "symmetrieaufhebende" Maßnahme z.B. eine 180-Grad-Symmetrie oder z.B. eine 60-Grad-Symmetrie vorliegen (d.h. der Auswerferstift könnte auch um 180 Grad bzw. 60 Grad gedreht in eine Tragplatte eingebaut werden). Bei diesen Ausführungsformen weist daher der Kopf eine Form auf, die einen derartigen, z.B. nur um 180 Grad bzw. 60 Grad gedrehten Einbau ausschließt. Beispielsweise sind bei manchen dieser Ausführungsformen zur Schaffung der eindeutigen Einbauposition ein weiterer geradliniger Umfangsabschnitt, der rechtwinklig zu den gegenüberliegenden geradlinigen Umfangsabschnitten verläuft, sowie ein diesem gegenüberliegenden gekrümmter Umfangsabschnitt vorgesehen. Die Ausgestaltung mit einerseits dem geradlinigen und andererseits dem gekrümmten Umfangsabschnitt hebt die (ansonsten gegebene) 180-Grad-Symmetrie zugunsten einer 360-Grad-Symmetrie auf. Natürlich ist dies nur beispielhaft - gleichermaßen kann jede andere symmetrieaufhebende Formgebung verwendet werden.

Einige der Ausführungsformen sind beispielsweise dadurch hergestellt, dass zunächst der Kopf durch Umformen des Schaftmaterials (z. B. durch Anstauchen) in Rohform herausgebildet wurde, und dann die gegenüberliegenden geradlinigen Umfangsabschnitte durch Materialabtragung, z.B. Fräsen oder Schleifen herausgearbeitet wurden. Die Anstauchung kann dabei zentrisch zur Längsachse des Schafts erfolgen. Bei anderen Ausführungsformen wird der Kopf bereits mit den geradlinigen Unfangsabschnitten durch Uniformen (z.B. Anstauchen) hergestellt, beispielsweise indem das umzuformende Ende des Schafts beim Umformvorgang in einer geeigneten Form angeordnet wird.

Die den geradlinigen Umfangsabschnitten entsprechenden ebenen Flächen können mit deutlich größerer Genauigkeit hergestellt werden als beispielsweise die in der DE 33 45 366 A1 vorgeschlagenen exzentrischen Köpfe. Beispielsweise sind die gegenüberliegenden geradlinigen Umfangsabschnitte der beschriebenen Ausführungsformen mit Toleranzen von kleiner oder gleich 0,02 mm relativ zueinander gefertigt. Bei den genannten exzentrischen Köpfen erreichte man hingegen in der Praxis üblicherweise nur Toleranzen in der Größenordnung von 0,2 mm. Mit den Ausführungsformen der Erfindung lässt sich also auf relativ einfache Weise eine Erhöhung der Genauigkeit um ungefähr eine Größenordnung (d.h. einen Faktor 10) erzielen - die Genauigkeit in der Definierung der Winkelposition des Auswerferstiftes ist noch weiter erhöht, da die genannten Flächen sich i.a. gegen mit einem größeren Hebelarm gegen Verdrehung in einer komplementären Aufnahme abstützen als ein Exzenterkopf entsprechender Größe.

Die Ausführungsformen beschreiben ferner auch eine Tragplatten-Auswerferstift-Anordnung, also eine Tragplatte mit einem oder mehrerer eingebauten Auswerferstiften der genannten Art. Die Tragplatte weist eine oder mehrere Aufnahmen auf, die zur Auswerferstift-Kopfform komplementär sind, also beispielsweise ebenfalls zwei gegenüberliegende geradlinige Umfangsabschnitte. Die Aufnahmen sind beispielsweise durch Fräsen herstellbar.

Es wurde erkannt, dass die aus der DE 33 45 366 A1 bekannten exzentrischen Auswerferstifte zum Verspannen in der Tragplatte neigen. Als wahrscheinlicher Grund hierfür wurde gefunden, dass beim Herstellen des Kopfes durch Umformen (z.B. Anstauchen) auch der Schaft gestaucht wird, und dass dieser hierdurch etwas dicker wird (typischerweise um 0,02 bis 0,05 mm dicker wird, wobei dies von Fall zu Fall deutlich variieren kann). Da nun der exzentrische Kopf der DE 33 45 366 A1 in einer komplementären Tragplattenausnehmnung nicht alleine verdrehsichernd wirkt, sondern nur im Zusammenwirken mit dem Schaft, der sich in der Schaftbohrung durch die Tragplatte abstützt, musste bei der DE 33 45 366 A1 der Durchmesser der Schaftbohrung in der Praxis ohne Luft, also gleich dem Schaft-Nenndurchmesser gewählt werden. Dies führte aufgrund der genannten (variierenden) Aufdickung des Schafts zu einem mehr oder weniger ausgeprägten Verspannen des Auswerferstiftes in der Tragplatte.

Hingegen liegen die Verhältnisse bei den Ausführungsformen der Erfindung anders, da hier die beiden gegenüberliegenden geradlinigen Umfangsabschnitte zusammen mit den entsprechenden komplementären Umfangsabschnitten der Ausnehmung alleine - also ohne Abstützung des Schafts an der Schaftbohrung - eine Verdrehsicherung bilden. Vor diesem Hintergrund ist bei einigen Ausführungsformen der Auswerferstift "schwimmend" in der Schaftbohrung gelagert; das heißt, der Durchmesser der Schaftbohrung ist so groß gewählt, dass die Position des Auswerferstiftes in der Tragplatte in Querrichtung zu den gegenüberliegenden geradlinigen Umfangsabschnitten durch diese Umfangsabschnitte im Zusammenwirken mit den dazu komplementären Umfangsabschnitten der Aufnahme definiert ist, aber nicht durch die Schaftbohrung. Beispielsweise hat bei manchen Ausführungsformen die Schaftbohrung einen um 0,1mm größeren Durchmesser als der Schaft, bei anderen Ausführungsformen sogar einen um 0,2mm größeren.

Mit den Ausführungsformen des Auswerferstiftes lassen sich - wie gesagt - um deutlich verringerte Toleranzen realisieren. Während bei Auswerferstiften mit Exzenterköpfen die Toleranz der Stift-Winkelstellung von einer Reihe (schwierig zu kontrollierender) Faktoren abhängt, wie Kopfdurchmesser, Kopfstellung, Verdickung des Schafts, Einarbeitung der Schaftbohrung in der Tragplatte, Einarbeitung der Kopfform in der Tragplatte), hängt diese Toleranz bei den Ausführungsformen der Erfindung nur von der Toleranz der geradlinigen Umfangsabschnitte relativ zueinander und deren Einarbeitung in der Tragplatte ab. Auch hat sich gezeigt, dass die bei Exzenter-Köpfen beobachtbare Neigung zum Verspannen bei den Ausführungsformen des Auswerferstiftes ausgeschlossen ist. Zudem erlauben die geradlinigen Umfangsabschnitte eine genaue Definierung der Winkelstellung eines Auswerferstiftes, anders als bei den bekannten Exzenterköpfen. Dies erlaubt es, die Stirnseiten der Auswerferstifte außerhalb der Gießform und im noch nicht in die Tragplatte eingebauten Zustand zu bearbeiten, während bei herkömmlichen Auswerferstiften mit Exzenterkopf mangels ausreichend genauer Winkelstellungsdefinition diese Bearbeitung in der Praxis üblicherweise erst bei in die Tragplatte bzw. die Gießform eingebautem Auswerferstift vorgenommen werden konnte.

Nun zurückkehrend zu Fig. 1, zeigt diese eine seitliche Schnittansicht einer beispielhaften Gießform 1 mit Auswurfvorrichtung in an sich bekannter Bauweise (bekannt z.B. aus der eingangs genannten DE 33 45 366 A1). Die Gießform 1 ist im Wesentlichen aus einer ober sowie einer unteren Formhälfte 2, 3 aufgebaut (Bezeichnungen wie "oben" und "unten" beziehen sich auf die in Fig. 1 dargestellte Orientierung der Gießform 1). Zwischen den beiden Formhälften 2, 3 befindet sich ein Formhohlraum 4. Die untere Formhälfte 3 ist mit der Auswurfvorrichtung ausgerüstet. Diese ist aus mehreren (hier: zwei) Auswerferstiften 5 gemäß den im Folgenden näher beschriebenen Ausführungsformen der Erfindung aufgebaut, welche in Bohrungen der unteren Formhälfte 3 längsverschieblich aufgenommen sind. Die Auswerferstifte 5 weisen einen zylindrischen (z.B. kreiszylindrischen) Schaft 6 und einen daran angeformten, flanschartig überstehenden Kopf 7 auf. Sie sind mit ihren Köpfen 7 verdrehsicher in einer Tragplatte 8 eingebaut, welche in der Längsrichtung der Schäfte 6 durch einen Auswurfantrieb in Richtung zum Formhohlraum 4 bewegbar ist. Nach dem Öffnen der Form (d.h. Entfernen der oberen Formhälfte 2) erfolgt das Auswerfen des im Formhohlraum 4 hergestellten Formlings, indem die Tragplatte 8 in der genannten Richtung bewegt wird, wodurch diese die Auswerferstifte 5 nach oben bewegt; diese drücken entsprechend den Formling nach oben und drücken ihn somit von unteren Formhälfte 3 weg.

Wie die beispielhafte Fig. 1 zeigt, bilden Stirnflächen 9 der Auswerferstifte 5 in Nicht-Auswerfstellung jeweils einen Teil der Wandung der unteren Formhälfte 3. Bei der beispielhaften Gießform 1 verläuft diese Wandung geneigt zur Längsachse der Auswerferstifte 5; folglich sind auch die Stirnflächen 9 mit einer entsprechenden Neigung relativ zu Auswerferstift-Längsachse ausgebildet. Die im folgenden beschriebene Formgebung der Köpfe 7 der Auswerferstifte 5 und deren Aufnahme in komplementären Ausnehmungen 10 der Tragplatte 8 sorgen dafür, dass sich die Auswerferstifte 5 nicht verdrehen können, und somit ihre geneigten Stirnflächen 9 immer in der richtigen Position verbleiben und damit immer die richtige Neigung darbieten. Selbstverständlich ist die in Fig. 1 gezeigte Ausführungsform nur beispielhaft; insbesondere kann der Stirnbereich der Auswerferstifte 5 jede beliebige, durch die jeweils erwünschte Formgebung des Formhohlraums 4 vorgegebene Gestalt haben. Eine Verdrehsicherung ist immer dann von Nöten, wenn diese Gestalt nicht rotationssymmetrisch bezüglich der Längsachse der Auswerferstifte 5 ist.

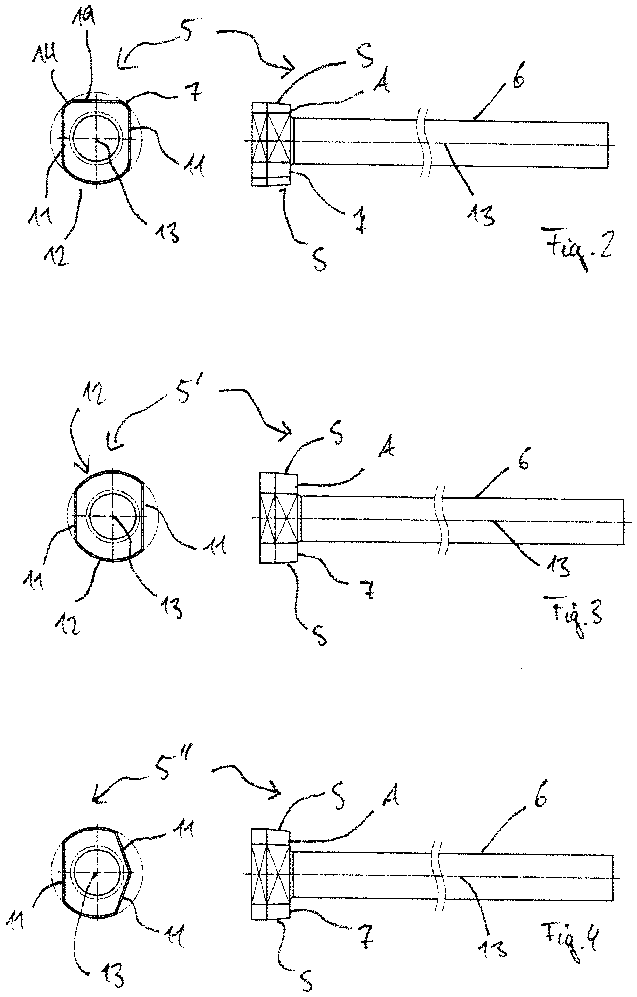

Fig. 2 zeigt ein erstes Ausführungsbeispiel des Auswerferstiftes 5, dessen Kopf 7 zwei gegenüberliegende geradlinige Umfangsabschnitte 11 aufweist, die in gleichem Abstand zur Längsachse 13 des Auswerferstiftes 5 parallel zueinander verlaufen. Zur eindeutigen Definition der Einbauposition (d.h. Schaffung der 360-Grad-Symmetrie) hat der Kopf 7 zudem an einer Seite einen weiteren geradlinigen Umfangsabschnitt 19, an der gegenüberliegenden Seite jedoch einen gekrümmtem Umfangsabschnitt 12. Die geradlinigen Abschnitte 11, 19 berühren einander nicht; vielmehr liegt zwischen ihnen ein jeweils ein Radius 14.

Bei diesem Ausführungsbeispiel weist der Kopf 7 zusätzlich eine umlaufende Schräge S auf. Diese Schräge ist auch bei den Ausführungsbeispielen gemäß Figs. 3 und entsprechend eingesetzt und ausgebildet. Die Kopfumfangsfläche K umfasst, insbesondere in einem oberen Teilabschnitt der Kopfumfangsfläche, eine Anlagefläche AF zur Anlage an die komplementäre Ausnehmung in der Tragplatte. Der Kopf 7 umfasst an seiner Unterseite eine Auflagefläche A zur Auflage auf der Tragplatte 8.

Die Schräge S kann einen Winkel zur Längsachse in einem Bereich von 1° bis 25° aufweisen. Bevorzugt liegt dieser Bereich in einem Bereich zwischen 1° bis 15°, besonders bevorzugt liegt der Winkel W bei 5°. Diese dient einer Vorzentrierung für eine einfache und schnelle Montage des Auswerferstiftes 5‴ in der Tragplatte.

Ein weiteres Auführungsbeispiel eines Auswerferstiftes (hier mit 5' bezeichnet) ist in Fig. 3 dargestellt. Bei diesem Ausführungsbeispiel hat der Kopf 7 ebenfalls zwei gegenüberliegende geradlinige parallele Umfangsabschnitte 11, die jedoch in unterschiedlichem Abstand zur Längsachse 13 des Auswerferstiftes 5' zueinander verlaufen. Damit ist bereits für eine eindeutige Definition der Einbauposition (360-Grad-Symmetrie) gesorgt, so dass an die geradlinigen Umfangsabschnitte 11 hier zu beiden Seiten gleichartig gekrümmte Umfangsabschnitte 12 anschließen.

Ein noch weiteres Auführungsbeispiel eines Auswerferstiftes (hier mit 5" bezeichnet) ist in Fig. 4 dargestellt. Bei diesem Ausführungsbeispiel hat der Kopf 7 zwei gegenüberliegende geradlinige Umfangsabschnitte 11, 11', von denen einer durch zwei winkelig zusammengesetzte Unterabschnitten 11' gebildet wird. Damit ist bereits für eine eindeutige Definition der Einbauposition (360-Grad-Symmetrie) gesorgt, so dass an die geradlinigen Umfangsabschnitte 11, 11' hier zu beiden Seiten gleichartig gekrümmte Umfangsabschnitte 12 anschließen.

Bei manchen der gezeigten Ausführungsformen ist der Kopf 7 durch Anstauchen und anschließendes Herausarbeiten der die geradlinigen und gekrümmten Abschnitte 11, 11', 12, 19 und der Radien 14 durch Fräsen oder Schleifen hergestellt. Die gegenüberliegenden geradlinigen Abschnitte 11, 11' sind bei den Ausführungsformen der Fig. 2 bis Fig. 4 und 7 bis 8b mit einer Toleranz von ca. 0,02 mm relativ zueinander gefertigt. Da die anderen Umfangsabschnitte 12, 19 nicht zur Definierung der Winkelstellung des Auswerferstiftes 5, 5', 5", 5‴ dienen, sind diese bei manchen Ausführungsformen mit größeren Toleranzen gefertigt. Bei anderen Ausführungsformen wird der Kopf 7 bereits samt den Abschnitten 11, 11', 12, 19 durch Anstauchen geformt, ohne nachfolgende materialabtragende Herausarbeitung dieser Abschnitte 11, 11', 12, 19.

Bei einigen Ausführungsformen ist der Auswerferstift 5, 5', 5", 5‴ ein massiver Stift (ohne innere Freimachung). Bei anderen Ausführungsformen ist er hingegen ein Hülsenstift (mit innerer Freimachung), der z.B. in einen feststehenden, in den Formhohlraum 4 ragenden Stift aufnehmen kann (siehe hierzu z.B. die eingangs genannte DE 43 16 029 C1).

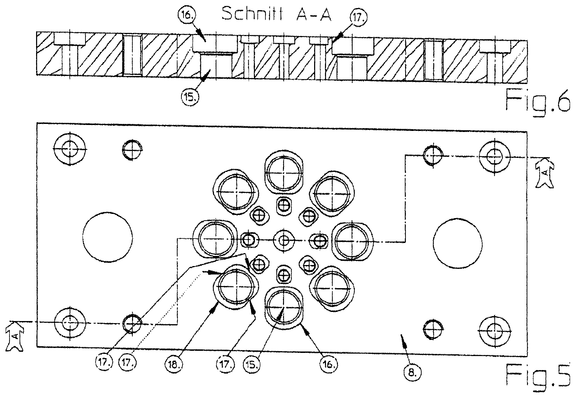

Fig. 5 zeigt eine Draufsicht einer beispielhaften Tragplatte 8 für mehrere Auswerferstifte 5, z.B. der in Fig. 2 gezeigten Ausführungsform. Die Tragplatte 8 weist für jeden aufzunehmenden Auswerferstift 5 eine Durchgangsbohrung 15 mit einem zwecks schwimmender Aufnahme gegenüber dem Schaft 6 vergrößertem Durchmesser (z.B. um 0,2 mm vergrößert) sowie eine Ausnehmung 16 zur formschlüssigen, im Rahmen der Toleranzen spielfreien Aufnahme des Kopfes 7 auf (Anmerkung: parallel zu den geradlinigen Umfangsabschnitten 11 können größere Toleranzen - und damit größeres Spiel - vorliegen als senkrecht zu diesen, da diese Parallelrichtung nicht für die Definierung der Auswerferstift-Winkelstellung herangezogen zu werden braucht). Wie in Fig. 5 zu sehen ist, hat die beispielhafte Tragplatte 8 zwei konzentrische kreisförmige Anordnungen solcher Bohrungen 15 und Ausnehmungen 16, wobei die innere Anordnung für kleinere Auswerferstifte als die Äußere für größere Auswerferstifte ausgebildet ist. Die Form der Ausnehmungen 16 ist komplementär zu derjenigen des Kopfes 7 der Ausführungsform von Fig. 2; d.h., die Ausnehmungen 16 weisen zwei gegenüberliegende geradlinige Umfangsabschnitte 17, einen weiteren geradlinigen Umfangsabschnitt 17' (mit dazwischenliegenden Radien) sowie einen gekrümmten Umfangsabschnitt 18 auf. Die Anordnung und die Abmessungen der Umfangsabschnitte 17, 17', 18 ist komplementär zu denjenigen (11, 19, 12) des Kopfs 7, was die praktisch spielfreie Aufnahme des Kopfs 7, und damit praktisch spielfreien Formschluss (innerhalb der gegebenen Toleranzen) zwischen Kopf 7 und Ausnehmung 16 trotz schwimmender Aufnahme des Schafts 6 in der Durchgangsbohrung 15 erlaubt.

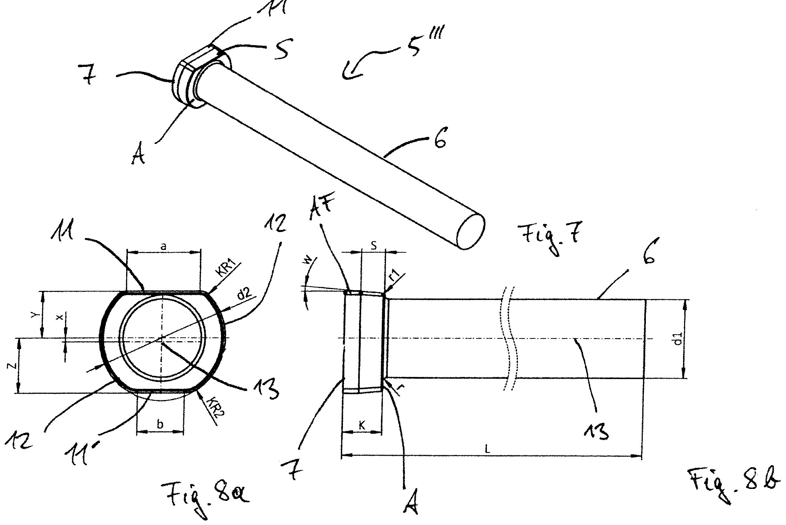

Ein weiteres Ausführungsbeispiel eines Auswerferstiftes (hier mit 5‴ bezeichnet) ist in Fig. 7 dargestellt. Bei diesem Ausführungsbeispiel weist der Kopf 7 zusätzlich eine umlaufende Schräge S auf. Diese Schräge ist auch bei den Ausführungsbeispielen gemäß Figs. 2-4 entsprechend eingesetzt und ausgebildet sein. Die Kopfumfangsfläche K umfasst, insbesondere in einem oberen Teilabschnitt der Kopfumfangsfläche, eine Anlagefläche AF zur Anlage an die komplementäre Ausnehmung in der Tragplatte. Der Kopf 7 umfasst an seiner Unterseite eine Auflagefläche A zur Auflage auf der Tragplatte 8.

In einer nicht beanspruchten Ausführungsform kann die Schräge S einen Winkel zur Längsachse in einem Bereich von 1° bis 25° aufweisen. Bevorzugt liegt dieser Bereich in einer anderen nicht beanspruchten Ausführungsform in einem Bereich zwischen 1° bis 15°, besonders bevorzugt liegt der Winkel W bei 5°. Diese dient einer Vorzentrierung für eine einfache und schnelle Montage des Auswerferstiftes 5‴ in der Tragplatte.

Bei diesem Ausführungsbeispiel hat der Kopf 7 ebenfalls zwei gegenüberliegende geradlinige parallele Umfangsabschnitte 11, die jedoch in unterschiedlichem Abstand zur Längsachse 13 des Auswerferstiftes 5‴ zueinander verlaufen. Damit ist bereits für eine eindeutige Definition der Einbauposition (360-Grad-Symmetrie) gesorgt.

Zusätzlich weisen die beiden Kopfumfangsflächen 11, 11' unterschiedliche Längen A und B auf, die durch den Mittenversatz zur Mittelachse bedingt sind. Die unterschiedlichen Kopfumfangsflächenlängen A und B sorgen ebenso für eine eindeutige Definition der Einbauposition. Die Umfangsabschnitte 12 weisen zusätzlich unterschiedliche Radien KR1 und KR2 auf, was zusätzlich die optische Unterscheidung und Erkennung der entsprechenden Einbaupositionen des Auswerferstiftes 5‴ ermöglicht.

Diese Verdrehsicherung des Auswerferstiftes lässt sich schwimmend in einer Tragplatte lagern.

Die beschriebenen Ausführungsformen der Erfindung erlauben gegenüber Auswerferstiften des Standes der Technik eine nicht zu Verspannungen führende und wiederholgenaue Auswerferstift-Verdrehsicherung in der Einbauposition in der Tragplatte.

Die Winkelstellung eines entsprechend verdrehgesicherten Auswerferstiftes ist genau definiert, so dass eine Bearbeitung der Stirnflächenform der Auswerferstifte bereits vor deren Einbau in Trägerplatten und Gießformen erfolgen kann. Die beiden geradlinigen Kopfflächen 11, 11' bilden Bezugsflächen, die zum Ausrichten des Auswerferstiftes genutzt werden können. Die Schräge S ermöglicht eine Vorzentrierung.

## Patentansprüche

1. Auswerferstift (5, 5', 5") zum Auswerfen von Formteilen aus Gießwerkzeugen (1), umfassend:
einen Schaft (6), und
einen daran angeformten Kopf (7), wobei der Kopf (7) derart geformt ist, dass der Auswerferstift (5, 5', 5") in einer komplementären Tragplatte (8) nur in einer eindeutigen Einbauposition montierbar ist,
der Kopf (7), in Schaft-Längsrichtung gesehen, wenigstens zwei gegenüberliegende geradlinige Umfangsabschnitte (11) aufweist, die der Verdrehsicherung dienen, wenn der Auswerferstift (5, 5', 5") in einer komplementären Tragplatte (8) montiert ist,
wobei
der Kopf (7) an seiner Unterseite eine Auflagefläche (A) zur Auflage auf der Tragplatte (8) umfasst, und an einem oberen Teilabschnitt seiner Umfangsfläche (K) eine Anlagefläche (AF) zur Anlage an eine komplementäre Ausnehmung in der Tragplatte (8) aufweist,
**dadurch gekennzeichnet, dass**
der Kopf (7) an einem unteren Teilabschnitt seiner Umfangsfläche (K) eine Schräge (S) zur Vorzentrierung aufweist, wobei die Schräge (S) umlaufend um den Kopf (7) und an die Auflagefläche (A) angrenzend ausgebildet ist, und die Schräge (S) einen Winkel zur Schaftlängsachse von 3 bis 10 Grad aufweist.

2. Auswerferstift (5) nach Anspruch 1, wobei die gegenüberliegenden geradlinigen Umfangsabschnitte (11) parallel zueinander im gleichen Abstand vom Schaft-Mittelpunkt verlaufen.

3. Auswerferstift (5') nach Anspruch 1, wobei die gegenüberliegenden geradlinigen Umfangsabschnitte (11) parallel zueinander in unterschiedlichem Abstand vom Schaft-Mittelpunkt verlaufen.

4. Auswerferstift (5") nach Anspruch 1, wobei die gegenüberliegenden geradlinigen Umfangsabschnitte (11, 11) nicht parallel zueinander verlaufen.

5. Auswerferstift (5") nach Anspruch 1, wobei ein oder mehrere der gegenüberliegenden geradlinigen Umfangsabschnitte (11, 11') aus Unterabschnitten (11') winkelig zusammengesetzt sind.

6. Auswerferstift (5) nach einem der Ansprüche 1 bis 3, wobei der Kopf (7) zur Schaffung der eindeutigen Einbauposition einen weiteren geradlinigen Umfangsabschnitt (19), sowie einen, diesem gegenüberliegenden gekrümmten Umfangsabschnitt (12) aufweist.

7. Verfahren zur Herstellung eines Auswerferstifts (5, 5', 5") nach einem der Ansprüche 1 bis 6, wobei der Kopf (7) durch Umformung des Schaftmaterials und die gegenüberliegenden geradlinigen Umfangsabschnitte (11) durch Fräsen oder Schleifen hergestellt werden.

8. Verfahren zur Herstellung eines Auswerferstifts (5, 5', 5") nach einem der Ansprüche 1 bis 6, wobei der Kopf (7) mit den gegenüberliegenden geradlinigen Umfangsabschnitten (11) und seiner Schräge (S) durch Umformung des Schaftmaterials hergestellt werden.

9. Verfahren nach Anspruch 7 oder 8, wobei es sich bei der Umformung um zentrische Anstauchung handelt.

10. Auswerferstift (5, 5', 5") nach einem der Ansprüche 1 bis 6 oder hergestellt nach einem der Verfahren 7 bis 9, wobei die gegenüberliegenden geradlinigen Umfangsabschnitte (11) mit Toleranzen von kleiner oder gleich 0,02 mm gefertigt sind.

11. Tragplatten-Auswerferstift-Anordnung mit einer Tragplatte (8) mit einer oder mehreren Bohrungen (15) mit Aufnahmen (16), in die Auswerferstifte (5, 5', 5") nach einem der Ansprüche 1 bis 6 eingesetzt sind, wobei die Aufnahmen (16) zur Auswerferstift-Kopfform komplementär sind und die Köpfe (7) aufnehmen, und die Schäfte (6) durch die Bohrungen (15) treten, und die Bohrungen einen um so viel größeren Durchmesser als die Schäfte (6) aufweisen, dass die Position des oder der Auswerferstifte (5, 5', 5") in der Tragplatte (8) in Querrichtung zu den gegenüberliegenden geradlinigen Umfangsabschnitten durch diese Umfangsabschnitte im Zusammenwirken mit dazu komplementären Umfangsabschnitten (17) der Aufnahmen (16) definiert ist, aber nicht durch die Bohrungen (15).

12. Tragplatten-Auswerferstift-Anordnung nach Anspruch 11, bei welcher die Bohrung (15) einen Durchmesser hat, der um wenigstens 0,1 mm, insbesondere um wenigstens 0,2 mm, grösser als der Durchmesser des Schafts (6) ist.

## Claims

1. An ejector pin (5, 5', 5") for ejecting moulded parts from a casting tool (1), comprising:
a shaft (6), and
a head (7) formed thereon, the head (7) being shaped such that the ejector pin (5, 5', 5") can be mounted in a complementary support plate (8) in one unique installation position only,
the head (7), when viewed in the longitudinal direction of the shaft, having at least two opposing straight circumferential sections (11) which serve to prevent rotation when the ejector pin (5, 5', 5") is mounted in a complementary support plate (8),
wherein
the head (7) comprises, at its lower side, a bearing surface (A) for bearing against the support plate (8) and, at an upper subsection of its circumferential surface (K), a contact surface (AF) for contacting a complementary recess in the support plate (8),
**characterized in that**
the head (7) comprises, at a lower section of its circumferential surface (K), a slope (S) for pre-centring, wherein the slope (S) is formed circumferentially around the head (7) and adjacent to the bearing surface (A), and the slope (S) is at an angle of 3 to 10 degrees to the longitudinal axis of the shaft.

2. The ejector pin (5) according to claim 1, wherein the opposing straight circumferential sections (11) extend parallel to each other at the same distance from the centre of the shaft.

3. The ejector pin (5') according to claim 1, wherein the opposing straight circumferential sections (11) extend parallel to each other at a different distance from the centre of the shaft.

4. The ejector pin (5") according to claim 1, wherein the opposing straight circumferential sections (11, 11) are not parallel to each other.

5. The ejector pin (5") according to claim 1, wherein one or more of the opposing straight circumferential sections (11, 11') are formed of subsections (11') arranged at angles to each other

6. The ejector pin (5) according to one of claims 1 to 3, wherein the head (7) has a further straight circumferential section (19) and a curved circumferential section (12) arranged opposite thereto to provide the unique installation position.

7. A method for manufacturing an ejector pin (5, 5', 5") according to one of claims 1 to 6, wherein the head (7) is produced by reshaping the shaft material and the opposing straight circumferential sections (11) are produced by milling or grinding.

8. The method for manufacturing an ejector pin (5, 5', 5") according to one of claims 1 to 6, wherein the head (7) with the opposing straight circumferential sections (11) and its slope (S) are produced by reshaping the shaft material.

9. The method according to claim 7 or 8, wherein the reshaping process is a centric upsetting process.

10. An ejector pin (5, 5', 5") according to one of claims 1 to 6 or manufactured according to one of the methods 7 to 9, wherein the opposing straight circumferential sections (11) are manufactured with tolerances of less than or equal to 0.02 mm.

11. A support-plate ejector-pin arrangement having a support plate (8) comprising one or more bores (15) with receptacles (16), into which the ejector pins (5, 5', 5") according to one of claims 1 to 6 are inserted, wherein the receptacles (16) are complementary to the ejector-pin head shape and receive the heads (7), and wherein the shafts (6) pass through the bores (15), and the bores have a diameter greater than the shafts (6) by such an extent that the position of the ejector pin or pins (5, 5', 5") in the support plate (8), in the direction transverse to the opposing straight circumferential sections, is defined by these circumferential sections in cooperation with the complementary circumferential sections (17) of the receptacles (16), but not by the bores (15).

12. The support-plate ejector-pin arrangement according to claim 11, wherein the bore (15) has a diameter which is greater than the diameter of the shaft (6) by at least 0.1 mm, in particular by at least 0.2 mm.

## Revendications

1. Goupille d'éjection (5, 5', 5") destinée à éjecter des pièces moulées d'outils de coulée (1), comprenant :
un arbre (6), et
une tête (7) surmoulée sur celui-ci, dans laquelle la tête (7) est formée de telle manière que la goupille d'éjection (5, 5', 5") peut être montée seulement dans une position de montage unique dans une plaque de support (8) complémentaire,
la tête (7) présente, vue dans la direction longitudinale de l'arbre, au moins deux sections périphériques rectilignes opposées (11), qui servent au blocage anti-rotation lorsque la goupille d'éjection (5, 5',5") est montée dans une plaque de support (8) complémentaire,
dans laquelle
la tête (7) comprend sur son côté inférieur une surface d'appui (A) destinée à venir en appui sur la plaque de support (8) et présente, sur une section partielle supérieure de sa surface périphérique (K), une surface de contact (AF) destinée à venir en contact contre un évidement complémentaire dans la plaque de support (8),
**caractérisée en ce que**
la tête (7) présente sur une section partielle inférieure de sa surface périphérique (K) un biseau (5) destiné au centrage préalable, dans laquelle le biseau (5) est réalisé de manière périphérique autour de la tête (7) et de manière à jouxter la surface d'appui (A), et le biseau (5) présente un angle par rapport à l'axe longitudinal de l'arbre de 3 à 10 degrés.

2. Goupille d'éjection (5) selon la revendication 1, dans laquelle les sections périphériques rectilignes opposées (11) s'étendent de manière parallèle les unes aux autres à distance égale par rapport au point central de l'arbre.

3. Goupille d'éjection (5') selon la revendication 1, dans laquelle les sections périphériques rectilignes opposées (11) s'étendent de manière parallèle les unes par rapport aux autres à une distance différente par rapport au point central de l'arbre.

4. Goupille d'éjection (5") selon la revendication 1, dans laquelle les sections périphériques rectilignes opposées (11, 11') ne s'étendent pas de manière parallèle les unes par rapport aux autres.

5. Goupille d'éjection (5") selon la revendication 1, dans laquelle une ou plusieurs des sections périphériques rectilignes opposées (11, 11') sont composées de manière angulaire de sous-sections (11').

6. Goupille d'éjection (5) selon l'une quelconque des revendications 1 à 3, dans laquelle la tête (7) présente pour créer la position de montage unique une autre section périphérique rectiligne (19) ainsi qu'une section périphérique incurvée (12) opposée à celle-ci.

7. Procédé de fabrication d'une goupille d'éjection (5, 5', 5") selon l'une quelconque des revendications 1 à 6, dans lequel la tête (7) est fabriquée par refaçonnage du matériau de l'arbre et les sections périphériques rectilignes opposées (11) sont fabriquées par fraisage ou ponçage.

8. Procédé de fabrication d'une goupille d'éjection (5, 5', 5") selon l'une quelconque des revendications 1 à 6, dans lequel la tête (7) avec les sections périphériques rectilignes opposées (11) et son biseau (S) est fabriquée par refaçonnage du matériau de l'arbre.

9. Procédé selon la revendication 7 ou 8, dans lequel le refaçonnage est une compression centrée.

10. Goupille d'éjection (5, 5', 5") selon l'une quelconque des revendications 1 à 6 ou fabriquée selon un des procédés 7 à 9, dans laquelle les sections périphériques rectilignes opposées (11) sont produites avec des tolérances inférieures ou égales à 0,02 mm.

11. Ensemble plaque de support - goupille d'éjection avec une plaque de support (8) avec un ou plusieurs alésages (15) avec des réceptacles (16), dans lesquels des goupilles d'éjection (5, 5', 5") selon l'une quelconque des revendications 1 à 6 sont insérées, dans lequel les réceptacles (16) sont complémentaires à la forme de tête de goupille d'éjection et reçoivent les têtes (7), et les arbres (6) traversent les alésages (15), et les alésages présentent un diamètre bien plus grand que celui des arbres (6) de sorte que la position de la ou des goupilles d'éjection (5, 5', 5") dans la plaque de support (8) dans la direction transversale par rapport aux sections périphériques rectilignes opposées est définie par ces sections périphériques en coopération avec des sections périphériques (17) complémentaires à celles-ci des réceptacles (16), et non par les alésages (15).

12. Ensemble plaque de support-goupille d'éjection selon la revendication 11, où l'alésage (15) présente un diamètre qui est plus grand que le diamètre de l'arbre (6) d'au moins 0,1 mm, en particulier d'au moins 0,2 mm.
